# EUROPÄISCHE PATENTSCHRIFT

(11) **EP 4 126 577 B1**
(45) Veröffentlichungstag und Bekanntmachung des Hinweises auf die Patenterteilung: **06.05.2026**
(21) Anmeldenummer: 21713644.9
(22) Anmeldetag: 18.03.2021
(51) Int. Cl.: B60K 1/00, B60K 11/02, B60K 17/04

(54) **GEHÄUSE FÜR EIN ANTRIEBSSYSTEM UND VERFAHREN ZUM HERSTELLEN EINES GEHÄUSES FÜR EIN ANTRIEBSSYSTEM**
HOUSING FOR A DRIVE SYSTEM, AND METHOD FOR PRODUCING A HOUSING FOR A DRIVE SYSTEM
BOÎTIER POUR UN SYSTÈME D'ENTRAÎNEMENT ET PROCÉDÉ DE FABRICATION D'UN BOÎTIER POUR UN SYSTÈME D'ENTRAÎNEMENT

(30) Priorität: 02.04.2020 DE 102020204293
(43) Veröffentlichungstag der Anmeldung: 08.02.2023
(73) Patentinhaber: Robert Bosch GmbH, 70442 Stuttgart (DE)
(72) Erfinder: ZWEIGLE, Peter, 71254 Ditzingen (DE); HEUSEL, Timo, 70839 Gerlingen (DE); MOHR, Nina, 70193 Stuttgart (DE); EIBERGER, Fabian, 70839 Gerlingen (DE)
(86) Internationale Anmeldenummer: PCT/EP2021/056976
(87) Internationale Veröffentlichungsnummer: WO 2021/197865

(56) Entgegenhaltungen:
- WO-A1-2013/160014
- WO-A1-2018/098567
- DE-A1- 102011 076 525
- DE-A1- 102012 112 377
- DE-A1- 102014 206 845
- US-A- 5 585 681

## Beschreibung

Die vorliegende Erfindung betrifft ein Gehäuse für ein Antriebssystem. Insbesondere betrifft die Erfindung ein Gehäuse für ein Antriebssystem eines Kraftfahrzeugs. Weiter betrifft die Erfindung ein Verfahren zum Herstellen eines Gehäuses für ein Antriebssystem, insbesondere für ein Kraftfahrzeug. Insbesondere betrifft die Erfindung ein Gehäuse für Elektroantriebssysteme, insbesondere von Elektro- oder Hybridfahrzeugen.

### Stand der Technik

Bei Elektroantriebssystemen kann der Stator gekühlt werden, indem Kühlmedium zwischen einem äußeren Systemgehäuse und einem inneren Statorgehäuseabschnitt um den Stator herumgeleitet wird. Hierzu kann ein um das Innengehäuse herumlaufender Kühlmediumkanal vorgesehen sein. Das äußere Systemgehäuse ist von dem inneren Statorgehäuseabschnitt durch Dichtungen getrennt. Das Getriebe befindet sich jenseits der Dichtungen und wird durch das Kühlmedium nicht oder zumindest nicht wesentlich gekühlt. Eine weitere Kühlanordnung ist bekannt aus der DE 10 2014 206845 A1.

Aus der DE 10 2011 076 525 A1 ist ein Elektrischer Fahrantrieb für ein Fahrzeug bekannt.

Um das Getriebe ebenfalls zu kühlen, ist ein zusätzlicher Kühlkreislauf erforderlich, was zusätzlichen Material- und Platzbedarf erfordert.

### Offenbarung der Erfindung

Die Erfindung stellt ein Gehäuse für ein Antriebssystem bereit.

Die Erfindung betrifft ein Gehäuse für ein Antriebssystem, insbesondere für ein Kraftfahrzeug, mit einem ersten Gehäuseabschnitt und einem zweiten Gehäuseabschnitt. Der erste Gehäuseabschnitt dient der Aufnahme eines Stators des Antriebssystems. Der zweite Gehäuseabschnitt dient der Aufnahme einer Getriebeanordnung. In oder an dem ersten Gehäuseabschnitt ist ein erster Kühlmediumkanal zum Kühlen des Stators ausgebildet, wobei in oder an dem zweiten Gehäuseabschnitt ein zweiter Kühlmediumkanal zum Kühlen der Getriebeanordnung ausgebildet ist. Der erste Kühlmediumkanal ist mit dem zweiten Kühlmediumkanal derart fluidisch verbunden, dass ein Kühlmedium durch den ersten Kühlmediumkanal in den zweiten Kühlmediumkanal geleitet werden kann.

### Vorteile der Erfindung

Die Erfindung ermöglicht es, durch einen einzigen Kühlkreislauf sowohl den Stator als auch die Getriebeanordnung zu kühlen. Zusätzlicher Materialbedarf und Platzbedarf für einen weiteren Kühlkreislauf können dadurch vermieden werden.

Gemäß einem ersten Aspekt der Erfindung weist der erste Gehäuseabschnitt weiter einen dritten Kühlmediumkanal auf, welcher mit dem zweiten Kühlmediumkanal fluidisch verbunden ist, wobei der erste Kühlmediumkanal einen Kühlmediumeinlass zum Einlassen des Kühlmediums aufweist, und wobei der dritte Kühlmediumkanal einen Kühlmediumauslass zum Auslassen des Kühlmediums aufweist. Der dritte Kühlmediumkanal kann gemäß Ausführungsformen des Gehäuses im Bereich des Stators verlaufen oder um diesen herumlaufen und diesen dadurch zusätzlich kühlen.

Gemäß einer weiteren Ausführungsform des Gehäuses ist der erste Kühlmediumkanal von dem dritten Kühlmediumkanal durch einen Steg zumindest teilweise fluidisch getrennt. Insbesondere kann vorgesehen sein, dass der Steg den ersten Kühlmediumkanal von dem dritten Kühlmediumkanal vollständig fluidisch trennt. Eine gewisse Leckage kann jedoch toleriert werden, sodass vorgesehen sein kann, dass der Steg für das Kühlmedium teildurchlässig ist. Vorzugsweise wird weniger als 20 Prozent, besonders bevorzugt weniger als 10 Prozent des Kühlmediums von dem Steg durchgelassen, tritt also von dem ersten Kühlmediumkanal direkt in dem dritten Kühlmediumkanal ein.

Gemäß einer weiteren Ausführungsform des Gehäuses weist der zweite Kühlmediumkanal einen ersten Kühlmediumkanalabschnitt auf, welcher direkt mit dem ersten Kühlmediumkanal verbunden ist. Weiter weist der zweite Kühlmediumkanal einen zweiten Kühlmediumkanalabschnitt auf, welcher direkt mit dem dritten Kühlmediumkanal verbunden ist und parallel zu dem ersten Kühlmediumkanalabschnitt verläuft, wobei im Betrieb das Kühlmedium den ersten Kühlmediumkanalabschnitt und den zweiten Kühlmediumkanalabschnitt antiparallel durchströmt. Dies stellt einen einfachen geometrischen Aufbau dar. Gemäß einer weiteren Ausführungsform des Gehäuses weist der zweite Kühlmediumkanal einen dritten Kühlmediumkanalabschnitt auf, welcher den ersten Kühlmediumkanalabschnitt mit dem zweiten Kühlmediumkanalabschnitt verbindet. Der dritte Kühlmediumkanalabschnitt kann insbesondere zum Kühlen der Getriebeanordnung ausgebildet sein. Hierzu verläuft der dritte Kühlmediumkanalabschnitt angrenzend zur Getriebeanordnung bzw. zum Aufnahmebereich der Getriebeanordnung.

Gemäß einer weiteren Ausführungsform des Gehäuses weist der zweite Gehäuseabschnitt einen Getriebesumpfbereich zur Aufnahme von Getriebeöl auf, wobei der dritte Kühlmediumkanalabschnitt an den Getriebesumpfbereich angrenzt. Das durch den dritten Kühlmediumkanalabschnitt strömende Kühlmedium kühlt dadurch das Getriebeöl in den Getriebesumpfbereich. Gemäß einer weiteren Ausführungsform des Gehäuses weist der erste Gehäuseabschnitt einen inneren Statorgehäuseabschnitt zur Aufnahme des Stators und einen äußeren Statorgehäuseabschnitt auf, wobei der erste Kühlmediumkanal helixförmig oder mäanderförmig zwischen dem inneren Statorgehäuseabschnitt und dem äußeren Statorgehäuseabschnitt verläuft. Gemäß weiteren Ausführungsformen kann der erste Kühlmediumkanal auch eine Kammstruktur mit ineinandergreifenden Kühlrippen aufweisen. Dadurch kann der Stator effizient gekühlt werden.

Gemäß einer weiteren Ausführungsform des Gehäuses ist der erste Kühlmediumkanal über eine Übergabebohrung, eine Hülse oder eine Öffnung im Guss mit dem zweiten Kühlmediumkanal verbunden.

Gemäß einer weiteren Ausführungsform des Gehäuses sind in dem ersten Kühlmediumkanal und/oder in dem zweiten Kühlmediumkanal Strukturen zur Oberflächenvergrößerung, insbesondere Rippen, ausgebildet. Die Strukturen zur Oberflächenvergrößerung helfen dabei, die Wärme besser abzuführen, sodass die Getriebeanordnung besser gekühlt wird.

Gemäß einem zweiten Aspekt der Erfindung wird der erste Gehäuseabschnitt zumindest teilweise von einem Systemgehäuse gebildet, wobei der zweite Gehäuseabschnitt zumindest teilweise von einem Getriebedeckel gebildet wird, wobei der Getriebedeckel den zweiten Kühlmediumkanal zumindest teilweise ausbildet, und wobei der Getriebedeckel mittels mindestens eines Dichtungselements mit dem Systemgehäuse verbunden ist. Die Dichtung des ersten Kühlmediumkanals und des zweiten Kühlmediumkanals kann dadurch über den Getriebedeckel erfolgen, sodass kein zusätzliches Bauteil bzw. kein zusätzlicher Deckel erforderlich sind. Dadurch können Aufwand und Kosten bei der Herstellung verringert werden.

Die Erfindung in ihrem ersten und/oder zweiten Aspekt zum Ausdruck kommen.

### Kurze Beschreibung der Zeichnungen

### Es zeigen:

- Figur 1: eine schematische Explosionsansicht eines Gehäuses für ein Antriebssystem;
- Figur 2: eine schematische Ansicht auf eine Unterseite eines Gehäuses für ein Antriebssystem gemäß einer Ausführungsform der Erfindung;
- Figur 3: eine schematische Seitenansicht des Gehäuses für ein Antriebssystem;
- Figur 4: eine schematische Rückansicht des Gehäuses für ein Antriebssystem mit teilweiser Schnittansicht gemäß Schnitt C-C in Figur 3;
- Figur 5: eine schematische Rückansicht des Gehäuses für ein Antriebssystem mit teilweiser Schnittansicht gemäß Schnitt A-A in Figur 3;
- Figur 6: eine schematische Schnittansicht eines Teils des Gehäuses für ein Antriebssystem gemäß Schnitt B-B in Figur 4;
- Figur 7: eine schematische Schnittansicht des Gehäuses für ein Antriebssystem gemäß Schnitt C-C in Figur 3; und
- Figur 8: ein Flussdiagramm eines Verfahrens zum Herstellen eines Gehäuses für ein Antriebssystem gemäß einer Ausführungsform der Erfindung.

In allen Figuren sind gleiche bzw. funktionsgleiche Elemente und Vorrichtungen mit denselben Bezugszeichen versehen.

Beschreibung der Ausführungsbeispiele

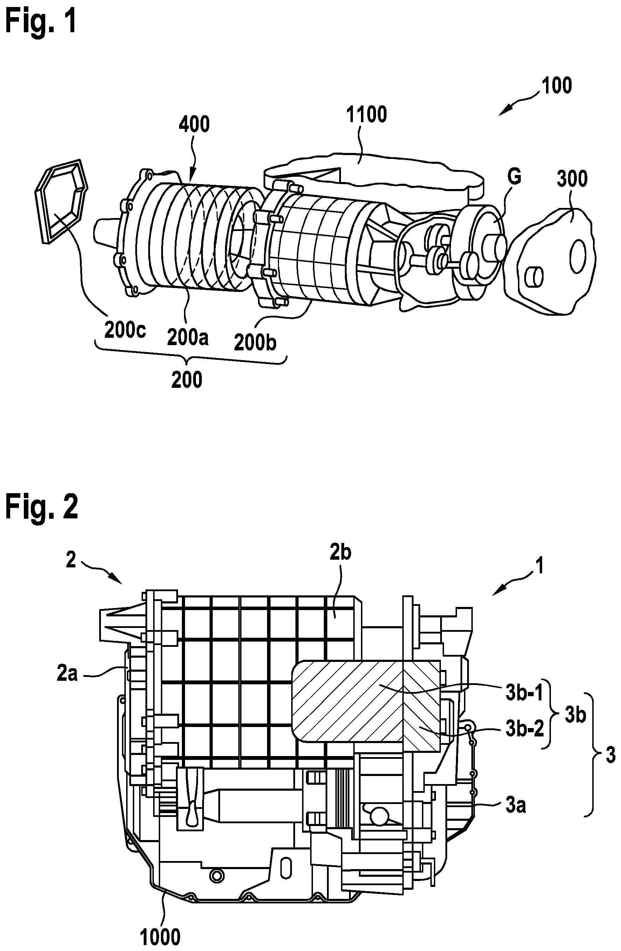

Figur 1 zeigt eine schematische Explosionsansicht eines Gehäuses 100 für ein Antriebssystem. Das abgebildete Gehäuse 100 ermöglicht ein besseres Verständnis der Erfindung. Das Gehäuse 100 umfasst einen ersten Gehäuseabschnitt 200 und einen zweiten Gehäuseabschnitt 300.

Der erste Gehäuseabschnitt 200 umfasst einen vorderseitigen Deckel 200c, einen inneren Statorgehäuseabschnitt 200a und einen äußeren Statorgehäuseabschnitt 200b, welche einen (nicht gezeigten) Stator aufnehmen. Der äußere Statorgehäuseabschnitt 200b ist Teil eines Systemgehäuses 1100, welches weitere Komponenten, insbesondere Leistungselektronik aufnehmen kann. Ein Kühlmediumkanal 400 verläuft helixförmig zwischen dem inneren Statorgehäuseabschnitt 200a und dem äußeren Statorgehäuseabschnitt 200b.

Ein Kühlmedium durchströmt den Kühlmediumkanal 400, um den Stator zu kühlen. Bei dem Kühlmedium kann es sich um Kühlwasser handeln. Auch weitere Kühlmittel, etwa ein Kühlöl oder gasförmige Kühlmedien sind je nach Anwendung möglich.

Der zweite Gehäuseabschnitt 300 wird durch einen Getriebedeckel gebildet, welcher zusammen mit dem Systemgehäuse 1100 ein Getriebe bzw. eine Getriebeanordnung G aufnimmt.

Figur 2 zeigt eine schematische Ansicht auf eine Unterseite eines Gehäuses 1 für ein Antriebssystem gemäß einer Ausführungsform der Erfindung. Das erfindungsgemäße Gehäuse 1 unterscheidet sich von dem in Figur 1 gezeigten Gehäuse dadurch, dass ein einziger Kühlkreislauf vorgesehen ist, um sowohl den Stator als auch die Getriebeanordnung G zu kühlen.

Das Gehäuse 1 umfasst einen ersten Gehäuseabschnitt 2 mit einem inneren Statorgehäuseabschnitt 2a zur Aufnahme des Stators S und einen äußeren Statorgehäuseabschnitt 2b, wobei, wie in Figur 1, ein (nicht gezeigter) erster Kühlmediumkanal helixförmig zwischen dem inneren Statorgehäuseabschnitt 2a und dem äußeren Statorgehäuseabschnitt 2b verläuft.

Weiter umfasst das Gehäuse 1 einen zweiten Gehäuseabschnitt 3, welcher einen Getriebedeckel 3a und einen Getriebekühlabschnitt 3b mit Kühlmediumkanalabschnitten aufweist. Der Getriebekühlabschnitt 3b umfasst einen vorderen und einen hinteren Bereich 3b-1, 3b-2.

Die Ausdrücke "Gehäuseabschnitt" und "Getriebekühlabschnitt" sind hierbei nicht so zu verstehen, dass es sich um separate physische Einheiten handeln muss. Vielmehr können darunter auch Teilbereiche eines einstückigen Gehäuseteils verstanden werden. Insbesondere kann hier der Getriebekühlabschnitt 3b zumindest teilweise durch den Getriebedeckel 3a ausgebildet sein. Der Getriebekühlabschnitt 3b kann jedoch auch eine separate Komponente sein oder zumindest teilweise durch das Systemgehäuse 1000 gebildet sein.

Das Kühlmedium kann nach einem mehrfachen Durchströmen entnommen werden.

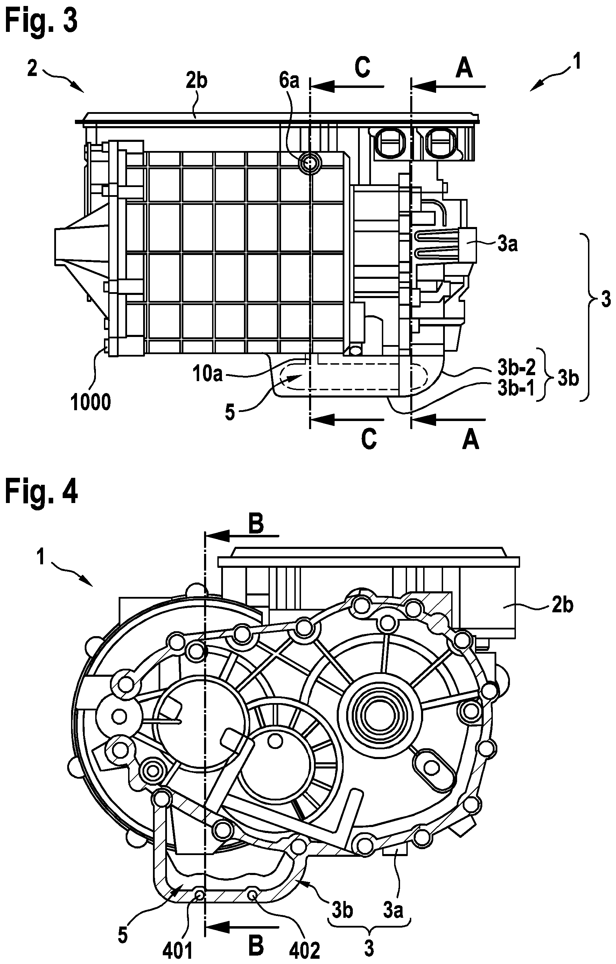

Figur 3 zeigt eine schematische Seitenansicht des Gehäuses 1 für ein Antriebssystem. Das Kühlmedium tritt nach dem Durchströmen durch den ersten Kühlmediumkanal durch eine Öffnung 10a in einen zweiten Kühlmediumkanal 5 ein. Die Öffnung 10a kann beispielsweise eine (etwa mit einem Winkelbohrkopf eingebrachte) Übergabebohrung, Hülse oder eine Öffnung im Guss sein. Der zweite Kühlmediumkanal 5 ist mit einem (nicht gezeigten) dritten Kühlmediumkanal verbunden, welcher zwischen dem inneren Statorgehäuseabschnitt 2a und dem äußeren Statorgehäuseabschnitt 2b verläuft und in einem Kühlmediumauslass 6a endet, durch welchen das Kühlmedium austritt.

Die Erfindung ist nicht auf eine bestimmte Position des Kühlmediumauslasses 6a beschränkt. Dieser kann sich je nach Anwendung etwa im oberen Bereich oder auch im unteren Bereich befinden. Der Kühlmediumauslass 6a kann auch direkt nach einem Öl-Kühlmedium-Wärmetauscherbereich im unteren Bereich des Getriebedeckels 3a oder im Systemgehäuse 1000 angeordnet sein.

Figur 4 zeigt eine schematische Rückansicht des Gehäuses für ein Antriebssystem mit teilweiser Schnittansicht gemäß Schnitt C-C in Figur 3. Innengewinde 401, 402 sind vorgesehen, um den Getriebedeckel 3a mit dem Systemgehäuse 1000 zu verschrauben, um einen dichten Kühlkreislauf bereitzustellen.

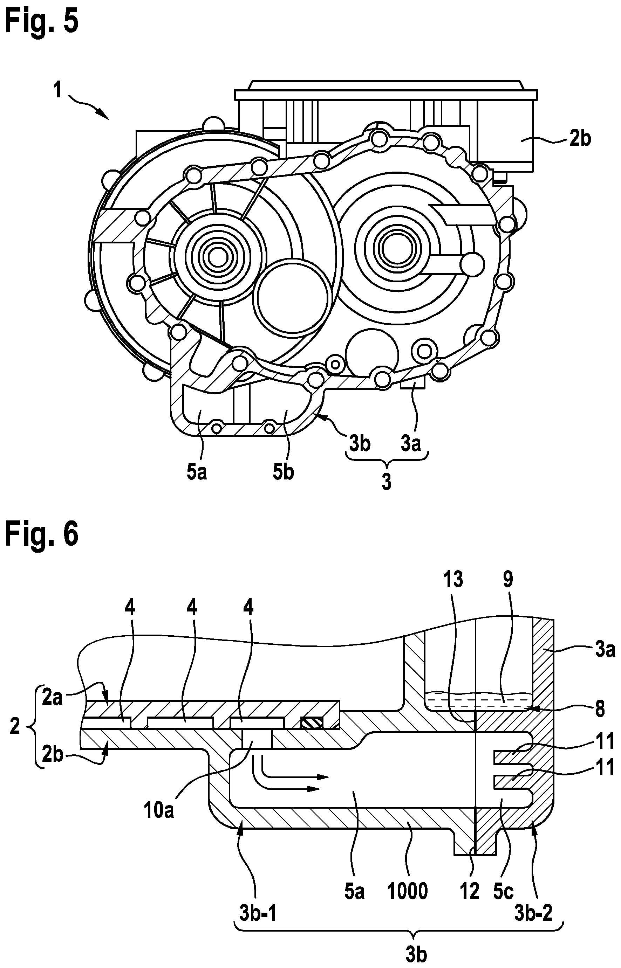

Figur 5 zeigt eine schematische Rückansicht des Gehäuses 1 für ein Antriebssystem mit teilweiser Schnittansicht gemäß Schnitt A-A in Figur 3. Der zweite Kühlmediumkanal 5 umfasst einen ersten Kühlmediumkanalabschnitt 5a welcher mit dem ersten Kühlmediumkanal verbunden ist, sowie einem zweiten Kühlmediumkanalabschnitt 5b, welcher mit dem dritten Kühlmediumkanal verbunden ist und parallel zu dem ersten Kühlmediumkanalabschnitt 5a verläuft. Im Betrieb durchfließt das Kühlmedium den ersten Kühlmediumkanalabschnitt 5a und den zweiten Kühlmediumkanalabschnitt 5b antiparallel.

Figur 6 zeigt eine schematische Schnittansicht eines Teils des Gehäuses 1 für ein Antriebssystem gemäß Schnitt B-B in Figur 4. Nachdem das Kühlmedium den helixförmigen ersten Kühlmediumkanal 4 durchströmt, tritt es durch die Öffnung 10a in den ersten Kühlmediumkanalabschnitt 5a ein. An den ersten Kühlmediumkanalabschnitt 5a schließt ein dritter Kühlmediumkanalabschnitt 5c an, welcher U-förmig ausgebildet ist und den ersten Kühlmediumkanalabschnitt 5a mit dem zweiten Kühlmediumkanalabschnitt 5b verbindet, welcher parallel zum ersten Kühlmediumkanalabschnitt 5a verläuft. In dem dritten Kühlmediumkanalabschnitt 5c sind Rippen 11 ausgebildet, welche die Oberfläche vergrößern. Der dritte Kühlmediumkanalabschnitt 5c verläuft unterhalb eines Getriebesumpfbereichs 8 zur Aufnahme von Getriebeöl 9.

Der dritte Kühlmediumkanalabschnitt 5c wird zumindest teilweise durch den Getriebedeckel 3a gebildet, welcher mit dem Systemgehäuse 1000 verbunden ist, wobei Dichtungen 12, 13 vorgesehen sind welche verhindern, dass Getriebeöl 9 in den dritten Kühlmediumkanalabschnitt 5c eintritt bzw. Kühlmedium austreten kann oder Umgebungsluft eintreten kann. Die Dichtung kann etwa als Kappendichtung, Nassdichtung, Einlegedichtung oder dergleichen ausgebildet sein.

Die Erfindung ist nicht auf die gezeigte Ausführungsform beschränkt. Etwa kann vorgesehen sein, dass die ersten bis dritten Kühlmediumkanalabschnitte 5a, 5b, 5c einstückig ausgebildet sind.

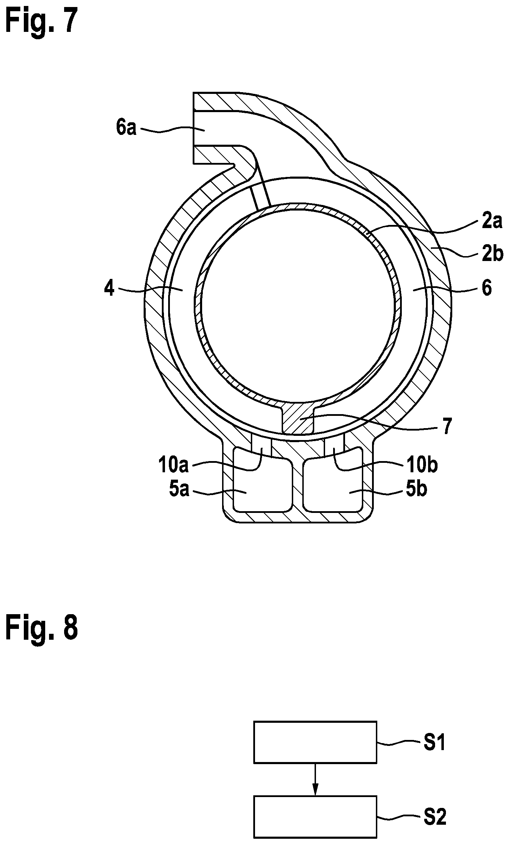

Figur 7 zeigt eine schematische Schnittansicht des Gehäuses 1 für ein Antriebssystem gemäß Schnitt C-C in Figur 3. Abgebildet ist die erste Öffnung 10a, durch welche das Kühlmedium von dem ersten Kühlmediumkanal 4 in den ersten Kühlmediumkanalabschnitt 5a des zweiten Kühlmediumkanals 5 eintritt. Weiter ist eine der ersten Öffnung 10a entsprechende zweite Öffnung 10b gezeigt, durch welche das Kühlmedium in den dritten Kühlmediumkanal 6 eintritt und anschließend durch den Kühlmediumauslass 6a austritt.

Der erste Kühlmediumkanal 4 ist von dem dritten Kühlmediumkanal 6 durch einen Steg 7 getrennt. Dieser verhindert vorzugsweise, dass Kühlmedium direkt von dem ersten Kühlmediumkanal 4 in den dritten Kühlmediumkanal 6 eintritt. Es kann jedoch auch vorgesehen sein, dass der Steg 7 teildurchlässig ist.

Figur 9 zeigt ein Flussdiagramm eines Verfahrens zum Herstellen eines Gehäuses für ein Antriebssystem.

In einem ersten Verfahrensschritt S1 wird ein erster Gehäuseabschnitt 2 zur Aufnahme eines Stators 5 des Antriebssystems ausgebildet.

In einem zweiten Verfahrensschritt S2 wird ein zweiter Gehäuseabschnitt zur Aufnahme einer Getriebeanordnung G ausgebildet. In dem ersten Gehäuseabschnitt 2 wird ein erster Kühlmediumkanal 4 zum Kühlen des Stators ausgebildet. In dem zweiten Gehäuseabschnitt 3 wird ein zweiter Kühlmediumkanal 5 zum Kühlen der Getriebeanordnung G ausgebildet. Der erste Kühlmediumkanal 4 ist mit dem zweiten Kühlmediumkanal 5 derart fluidisch verbunden, dass das Kühlmedium von dem ersten Kühlmediumkanal 4 in den zweiten Kühlmediumkanal 5 geleitet werden kann.

Zum Herstellen des Gehäuses 1 kann insbesondere vorgesehen sein, dass ein Getriebedeckel 3a mittels Dichtungen 12, 13 mit einem Systemgehäuse 1000 verbunden wird.

## Patentansprüche

1. Gehäuse (1) für ein Antriebssystem, insbesondere für ein Kraftfahrzeug, mit:
einem ersten Gehäuseabschnitt (2) zur Aufnahme eines Stators des Antriebssystems; und
einem zweiten Gehäuseabschnitt (3) zur Aufnahme einer Getriebeanordnung (G);
wobei in oder an dem ersten Gehäuseabschnitt (2) ein erster Kühlmediumkanal (4) zum Kühlen des Stators ausgebildet ist, und wobei in oder an dem zweiten Gehäuseabschnitt (3) ein zweiter Kühlmediumkanal (5) zum Kühlen der Getriebeanordnung (G) ausgebildet ist, und wobei der erste Kühlmediumkanal (4) mit dem zweiten Kühlmediumkanal (5) derart fluidisch verbunden ist, dass ein Kühlmedium durch den ersten Kühlmediumkanal (4) in den zweiten Kühlmediumkanal (5) geleitet werden kann, wobei der erste Gehäuseabschnitt (2) zumindest teilweise von einem Systemgehäuse (1000) gebildet wird, **dadurch gekennzeichnet, dass**
der zweite Gehäuseabschnitt (3) zumindest teilweise von einem Getriebedeckel gebildet wird, wobei der Getriebedeckel den zweiten Kühlmediumkanal (5) zumindest teilweise ausbildet, und wobei der Getriebedeckel mittels mindestens eines Dichtungselements (12, 13) mit dem Systemgehäuse verbunden ist.

2. Gehäuse (1) nach Anspruch 1, wobei der erste Gehäuseabschnitt (2) weiter einen dritten Kühlmediumkanal (6) aufweist, welcher mit dem zweiten Kühlmediumkanal (5) fluidisch verbunden ist, wobei der erste Kühlmediumkanal (4) einen Kühlmediumeinlass zum Einlassen des Kühlmediums aufweist, und
wobei der dritte Kühlmediumkanal (6) einen Kühlmediumauslass (6a) zum Auslassen des Kühlmediums aufweist.

3. Gehäuse (1) für ein Antriebssystem, insbesondere für ein Kraftfahrzeug, mit:
einem ersten Gehäuseabschnitt (2) zur Aufnahme eines Stators des Antriebssystems; und
einem zweiten Gehäuseabschnitt (3) zur Aufnahme einer Getriebeanordnung (G);
wobei in oder an dem ersten Gehäuseabschnitt (2) ein erster Kühlmediumkanal (4) zum Kühlen des Stators ausgebildet ist, und wobei in oder an dem zweiten Gehäuseabschnitt (3) ein zweiter Kühlmediumkanal (5) zum Kühlen der Getriebeanordnung (G) ausgebildet ist, und wobei der erste Kühlmediumkanal (4) mit dem zweiten Kühlmediumkanal (5) derart fluidisch verbunden ist, dass ein Kühlmedium durch den ersten Kühlmediumkanal (4) in den zweiten Kühlmediumkanal (5) geleitet werden kann, **dadurch gekennzeichnet, dass** der erste Gehäuseabschnitt
(2) weiter einen dritten Kühlmediumkanal (6) aufweist, welcher mit dem zweiten Kühlmediumkanal (5) fluidisch verbunden ist, wobei der erste Kühlmediumkanal (4) einen Kühlmediumeinlass zum Einlassen des Kühlmediums aufweist, und wobei der dritte Kühlmediumkanal (6) einen Kühlmediumauslass (6a) zum Auslassen des Kühlmediums aufweist.

4. Gehäuse (1) nach Anspruch 2 oder 3, wobei der erste Kühlmediumkanal (4) von dem dritten Kühlmediumkanal (6) durch einen Steg (7) zumindest teilweise fluidisch getrennt ist.

5. Gehäuse (1) nach einem der Ansprüche 2 bis 4, wobei der zweite Kühlmediumkanal (5) einen ersten Kühlmediumkanalabschnitt (5a) aufweist, welcher direkt mit dem ersten Kühlmediumkanal (4) verbunden ist, und einen zweiten Kühlmediumkanalabschnitt (5b) aufweist, welcher direkt mit dem dritten Kühlmediumkanal (6) verbunden ist und parallel zu dem ersten Kühlmediumkanalabschnitt (5a) verläuft, wobei im Betrieb das Kühlmedium den ersten Kühlmediumkanalabschnitt (5a) und den zweiten
Kühlmediumkanalabschnitt (5b) antiparallel durchströmt.

6. Gehäuse (1) nach Anspruch 5, wobei der zweite Kühlmediumkanal (5) einen dritten Kühlmediumkanalabschnitt (5c) aufweist, welcher den ersten Kühlmediumkanalabschnitt (5a) mit dem zweiten Kühlmediumkanalabschnitt (5b) verbindet.

7. Gehäuse (1) nach Anspruch 6, wobei der zweite Gehäuseabschnitt (3) einen Getriebesumpfbereich (8) zur Aufnahme von Getriebeöl (9) aufweist, und wobei der dritte Kühlmediumkanalabschnitt (5c) an den Getriebesumpfbereich (8) angrenzt.

8. Gehäuse (1) nach einem der vorangehenden Ansprüche, wobei der erste Gehäuseabschnitt (2) einen inneren Statorgehäuseabschnitt (2a) zur Aufnahme des Stators und einen äußeren Statorgehäuseabschnitt (2b) aufweist, und wobei der erste Kühlmediumkanal (4) helixförmig oder mäanderförmig zwischen dem inneren Statorgehäuseabschnitt (2a) und dem äußeren Statorgehäuseabschnitt (2b) verläuft.

9. Gehäuse (1) nach einem der vorangehenden Ansprüche, wobei der erste Kühlmediumkanal (4) über eine Übergabebohrung (10a), eine Hülse oder eine Öffnung im Guss mit dem zweiten Kühlmediumkanal (5) verbunden ist.

10. Gehäuse (1) nach einem der vorangehenden Ansprüche, wobei in dem ersten Kühlmediumkanal (4) und/oder in dem zweiten Kühlmediumkanal (5) Strukturen (11) zur Oberflächenvergrößerung, insbesondere Rippen, ausgebildet sind.

## Claims

1. Housing (1) for a drive system, in particular for a motor vehicle, comprising:
a first housing portion (2) for receiving a stator of the drive system; and
a second housing portion (3) for receiving a transmission arrangement (G);
wherein a first coolant channel (4) for cooling the stator is formed in or on the first housing portion (2), and wherein a second coolant channel (5) for cooling the transmission arrangement (G) is formed in or on the second housing portion (3), and wherein the first coolant channel (4) is fluidically connected to the second coolant channel (5) such that a coolant can be conducted through the first coolant channel (4) into the second coolant channel (5), wherein the first housing portion (2) is at least partially formed by a system housing (1000), **characterized in that** the second housing portion (3) is at least partially formed by a transmission cover, wherein the transmission cover at least partially forms the second coolant channel (5), and wherein the transmission cover is connected to the system housing by means of at least one sealing element (12, 13).

2. Housing (1) according to Claim 1, wherein the first housing portion (2) also has a third coolant channel (6), which is fluidically connected to the second coolant channel (5), wherein the first coolant channel (4) has a coolant inlet for the inlet of the coolant, and wherein the third coolant channel (6) has a coolant outlet (6a) for the outlet of the coolant.

3. Housing (1) for a drive system, in particular for a motor vehicle, comprising:
a first housing portion (2) for receiving a stator of the drive system; and
a second housing portion (3) for receiving a transmission arrangement (G);
wherein a first coolant channel (4) for cooling the stator is formed in or on the first housing portion (2), and wherein a second coolant channel (5) for cooling the transmission arrangement (G) is formed in or on the second housing portion (3), and wherein the first coolant channel (4) is fluidically connected to the second coolant channel (5) such that a coolant can be conducted through the first coolant channel (4) into the second coolant channel (5), **characterized in that** the first housing portion (2) also has a third coolant channel (6), which is fluidically connected to the second coolant channel (5), wherein the first coolant channel (4) has a coolant inlet for the inlet of the coolant, and wherein the third coolant channel (6) has a coolant outlet (6a) for the outlet of the coolant.

4. Housing (1) according to Claim 2 or 3, wherein the first coolant channel (4) is at least partially fluidically separated from the third coolant channel (6) by a web (7).

5. Housing (1) according to any one of Claims 2 to 4, wherein the second coolant channel (5) has a first coolant channel portion (5a), which is directly connected to the first coolant channel (4), and a second coolant channel portion (5b), which is directly connected to the third coolant channel (6) and runs parallel to the first coolant channel portion (5a), wherein the coolant flows through the first coolant channel portion (5a) and the second coolant channel portion (5b) in an anti-parallel manner during operation.

6. Housing (1) according to Claim 5, wherein the second coolant channel (5) has a third coolant channel portion (5c) which connects the first coolant channel portion (5a) to the second coolant channel portion (5b).

7. Housing (1) according to Claim 6, wherein the second housing portion (3) has a transmission sump region (8) for receiving transmission oil (9), and wherein the third coolant channel portion (5c) adjoins the transmission sump region (8).

8. Housing (1) according to any one of the preceding claims, wherein the first housing portion (2) has an inner stator housing portion (2a), for receiving the stator, and an outer stator housing portion (2b), and wherein the first coolant channel (4) runs in a helical manner or meandering manner between the inner stator housing portion (2a) and the outer stator housing portion (2b).

9. Housing (1) according to any one of the preceding claims, wherein the first coolant channel (4) is connected to the second coolant channel (5) via a transfer bore (10a), a sleeve or an opening in the casting.

10. Housing (1) according to any one of the preceding claims, wherein structures (11) for increasing the surface area, in particular ribs, are formed in the first coolant channel (4) and/or in the second coolant channel (5).

## Revendications

1. Boîtier (1) pour un système d'entraînement, en particulier pour un véhicule à moteur, avec :
une première section (2) de boîtier destinée à recevoir un stator du système d'entraînement ; et
une seconde section (3) de boîtier destinée à recevoir un ensemble de transmission (G) ;
un premier canal de liquide de refroidissement (4) destiné à refroidir le stator étant formé dans ou sur la première section (2) de boîtier, et un deuxième canal de liquide de refroidissement (5) destiné à refroidir l'ensemble de transmission (G) étant formé dans ou sur la seconde section (3) de boîtier, et le premier canal de liquide de refroidissement (4) étant relié en communication fluidique au deuxième canal de liquide de refroidissement (5) de telle manière qu'un liquide de refroidissement peut être acheminé à travers le premier canal de liquide de refroidissement (4) dans le deuxième canal de liquide de refroidissement (5), la première section (2) de boîtier étant formée au moins en partie par un boîtier de système (1000), **caractérisé en ce que** la seconde section (3) de boîtier est formée au moins en partie par un couvercle de transmission, le couvercle de transmission formant au moins en partie le deuxième canal de liquide de refroidissement (5) et le couvercle de transmission étant relié au boîtier de système au moyen d'au moins un élément d'étanchéité (12, 13).

2. Boîtier (1) selon la revendication 1, la première section (2) de boîtier comportant par ailleurs un troisième canal de liquide de refroidissement (6), qui est relié en communication fluidique au deuxième canal de liquide de refroidissement (5), le premier canal de liquide de refroidissement (4) comportant une entrée de liquide de refroidissement pour l'admission du liquide de refroidissement, et le troisième canal de liquide de refroidissement (6) comportant une sortie de liquide de refroidissement (6a) pour l'évacuation du liquide de refroidissement.

3. Boîtier (1) pour un système d'entraînement, en particulier pour un véhicule à moteur, avec :
une première section (2) de boîtier destinée à recevoir un stator du système d'entraînement ; et
une seconde section (3) de boîtier destinée à recevoir un ensemble de transmission (G) ;
un premier canal de liquide de refroidissement (4) destiné à refroidir le stator étant formé dans ou sur la première section (2) de boîtier, et un deuxième canal de liquide de refroidissement (5) destiné à refroidir l'ensemble de transmission (G) étant formé dans ou sur la seconde section (3) de boîtier, et le premier canal de liquide de refroidissement (4) étant relié en communication fluidique au deuxième canal de liquide de refroidissement (5) de telle manière qu'un liquide de refroidissement peut être acheminé à travers le premier canal de liquide de refroidissement (4) dans le deuxième canal de liquide de refroidissement (5), **caractérisé en ce que** la première section (2) de boîtier comporte par ailleurs un troisième canal de liquide de refroidissement (6), qui est relié en communication fluidique au deuxième canal de liquide de refroidissement (5), le premier canal de liquide de refroidissement (4) comportant une entrée de liquide de refroidissement pour l'admission du liquide de refroidissement, et le troisième canal de liquide de refroidissement (6) comportant une sortie de liquide de refroidissement (6a) pour l'évacuation du liquide de refroidissement.

4. Boîtier (1) selon la revendication 2 ou 3, le premier canal de liquide de refroidissement (4) étant séparé au moins en partie de manière fluidique du troisième canal de liquide de refroidissement (6) par une entretoise (7).

5. Boîtier (1) selon l'une des revendications 2 à 4, le deuxième canal de liquide de refroidissement (5) comportant une première section de canal de liquide de refroidissement (5a), qui est reliée directement au premier canal de liquide de refroidissement (4), et comportant une deuxième section de canal de liquide de refroidissement (5b), qui est reliée directement au troisième canal de liquide de refroidissement (6) et qui s'étend parallèlement à la première section de canal de liquide de refroidissement (5a), le liquide de refroidissement traversant lors du fonctionnement la première section de canal de liquide de refroidissement (5a) et la deuxième section de canal de liquide de refroidissement (5b) de manière antiparallèle.

6. Boîtier (1) selon la revendication 5, le deuxième canal de liquide de refroidissement (5) comportant une troisième section de canal de liquide de refroidissement (5c), qui relie la première section de canal de liquide de refroidissement (5a) à la deuxième section de canal de liquide de refroidissement (5b).

7. Boîtier (1) selon la revendication 6, la seconde section de boîtier (3) comportant une zone de boîtier de transmission (8) destinée à recevoir de l'huile de transmission (9), et la troisième section de canal de liquide de refroidissement (5c) jouxtant la zone de boîtier de transmission (8).

8. Boîtier (1) selon l'une des revendications précédentes, la première section de boîtier (2) comportant une section de boîtier de stator intérieure (2a) destinée à recevoir le stator et une section de boîtier de stator extérieure (2b), et le premier canal de liquide de refroidissement (4) s'étendant de manière hélicoïdale ou sinueuse entre la section de boîtier de stator intérieure (2a) et la section de boîtier de stator extérieure (2b).

9. Boîtier (1) selon l'une des revendications précédentes, le premier canal de liquide de refroidissement (4) étant relié au deuxième canal de liquide de refroidissement (5) par un alésage de transfert (10a), une douille ou une ouverture dans la pièce coulée.

10. Boîtier (1) selon l'une des revendications précédentes, des structures (11) pour l'agrandissement de surface, en particulier des nervures, étant formées dans le premier canal de liquide de refroidissement (4) et/ou dans le deuxième canal de liquide de refroidissement (5).
